# EUROPÄISCHE PATENTSCHRIFT

(11) **EP 2 387 487 B1**
(45) Veröffentlichungstag und Bekanntmachung des Hinweises auf die Patenterteilung: **03.12.2014**
(21) Anmeldenummer: 10768783.2
(22) Anmeldetag: 21.10.2010
(51) Int. Cl.: B25J 5/02

(54) **ROBOTERSYSTEM ZUM VERLEGEN EINES SCHIENENSTRANGS**
ROBOT SYSTEM FOR LAYING A RAIL TRACK
SYSTÈME DE ROBOT POUR POSER UNE FILE DE RAILS

(30) Priorität: 21.10.2009 DE 102009051583
(43) Veröffentlichungstag der Anmeldung: 23.11.2011
(73) Patentinhaber: IPR-Intelligente Peripherien für Roboter GmbH, 74193 Schwaigern (DE)
(72) Erfinder: DOLL, Fredy, 74193 Schwaigern (DE)
(74) Vertreter: Patentanwälte Ruff, Wilhelm, Beier, Dauster & Partner
(86) Internationale Anmeldenummer: PCT/EP2010/065892
(87) Internationale Veröffentlichungsnummer: WO 2011/048190

(56) Entgegenhaltungen:
- EP-A1- 1 396 578
- WO-A2-2004/007841
- US-A- 5 385 102

## Beschreibung

### Anwendungsgebiet und Stand der Technik

Die Erfindung betrifft ein Robotersystem mit einem Schienenstrang und einem Roboter, der dafür ausgebildet ist, durch den Schienenstrang geführt in einer Bewegungsrichtung verfahrbar zu sein. Die Erfindung betrifft weiterhin ein Atomkraftwerk mit einem solchen Roboter.

Solche Robotersysteme sind aus dem Stand der Technik bekannt. Sie weisen einen Roboter auf, der über einen Schlitten verfügt, mittels dessen er entlang des Schienenstrangs verfahrbar ist. Dieser Roboter verfügt über mindestens ein Werkzeug, das mittels eines hinsichtlich mehrerer Rotationsachsen beweglichen Roboterarms flexibel gegenüber dem Schlitten beweglich ist. Durch den Schlitten ist es dem Roboter möglich, flexibel an mehreren Orten verwenden zu werden und/oder Material zwischen verschiedenen Orten transportieren zu können.

Die aus dem Stand der Technik bekannten Robotersysteme weisen Schienenstränge auf, die üblicherweise vor Inbetriebnahme des Robotersystems von Hand montiert werden. Erst nach der Montage wird der schienengebundenen Roboter im Zuge der Inbetriebnahme auf diesen Schienenstrang aufgesetzt.

Im Zuge des Rückbaus von Atomkraftwerken ist insbesondere der Rückbau des Kernreaktors selbst sowie weiterer im Sicherheitsbehälter des Atomkraftwerks angeordneter Komponenten problematisch, da die entsprechende Arbeit nicht von Menschen durchgeführt werden kann. Selbst bei Atomkraftwerken, die bereits mehrere Jahre lang nicht mehr in Betrieb sind, ist die Strahlenbelastung im Sicherheitsbehälter derart hoch, dass keine ausreichenden Schutzmaßnahmen existieren, um Menschen ein länger währendes Arbeiten innerhalb des Sicherheitsbehälters zu ermöglichen. Der Rückbau der im Sicherheitsbehälter angeordneten Komponenten erfolgt daher bislang üblicherweise über ferngesteuerte Vorrichtungen, die mit einem hierfür vorgesehenen Fahrantrieb auf dem Untergrund des Sicherheitsbehälters verfahrbar sind. Es hat sich herausgestellt, dass dies aufgrund fehlender Präzision diese Gerätschaften nur einen sehr langsamen Rückbau der Komponenten innerhalb des Sicherheitsbehälters des Atomkraftwerks gestattet.

Eine Verwendung eines schienengebundenen Roboters zum Zwecke des Rückbaus der Komponenten innerhalb des Sicherheitsbehälters ist bisher nicht möglich, da das Verlegen des Schienenstrangs durch Menschen aufgrund der hohen Strahlungsbelastung nicht möglich ist.

Aus der US 5,385,102 A ist bereits ein Robotersystem bekannt, dessen Schienenstrang aus einer Mehrzahl in Bewegungsrichtung angeordneter Schienenstrangsegmente besteht, wobei der Roboter zur Handhabung solcher Schienenstrangsegmente und zur Verlängerung des Schienenstrangs durch Anbringung von weiteren Schienenstrangsegmenten an einem Schienenstrangsegment des bereits bestehenden Schienenstrangs ausgebildet ist.

### Aufgabe und Lösung

Aufgabe der Erfindung ist es, ein gattungsgemäßes Robotersystem dahingehend weiterzubilden, dass dieses auch in stark kontaminierten Bereichen eingesetzt werden kann und im Versagensfalle ohne Eintreten eines Menschen in den kontaminierten Bereicht geborgen werden kann, sowie ein Verfahren zur Verfügung zu stellen, um unter Zuhilfenahme eines solchen Robotersystems den Rückbau eines Atomkraftwerks zu erleichtern.

Hierfür ist erfindungsgemäß vorgesehen, dass der Roboter mit einem an ihm angebrachten Zugglied ausgestattet, insbesondere mit einem Zugkabel, das entlang des Schienenstrangs verläuft, wobei zur Einleitung einer Zugkraft vorzugsweise im Bereich eines Endes des Schienenstrangs eine Aufwickeleinrichtung zur Aufnahme des Zuggliedes vorgesehen ist.

Es ist vorgesehen, dass der Schienenstrang modular aufgebaut ist und die einzelnen Schienenstrangsegmente als Module durch den auf dem Schienenstrang verfahrbaren Roboter selbst zur Verlängerung dieses Schienenstrangs verlegt werden können. Der Roboter weist hierfür eine Fahreinheit auf, die an den Schienenstang derart angepasst ist, dass der Roboter durch die Fahreinheit gegenüber dem Schienenstrang geführt ist und zur Bewegung des Roboters eine Antriebskraft in den Schienenstrang einleiten kann. Weiterhin weist der Roboter vorzugsweise einen Roboterarm auf, durch den ein Greifer sowie vorzugsweise weitere Werkzeuge flexibel gegenüber der Fahreinheit beweglich sind. Dieser Greifer ist derart ausgebildet, dass mit ihm die Schienenstrangsegmente ergriffen, bewegt und abgelegt werden können.

Erfindungsgemäß ist am Roboter ein Zugglied angebracht, welches es gestattet, den Roboter im Falle einer Havarie aus einem unzugänglichen Bereich herauszuziehen. Dies ist von Vorteil, da hierdurch nicht nur zum Aufbau des Schienensystem kein unmittelbares menschliches Eingreifen innerhalb des kontaminierten Bereichs erforderlich ist, sondern auch im Falle eines technisches Versagens des Roboters ein Eintreten eines Menschen in den kontaminierten Bereicht vermieden werden kann.

Sofern es also während der Betriebs nicht mehr möglich ist, den Roboter mittels des für den Regelbetrieb vorgesehenen Antriebsmotors aus dem kontaminierten Bereich herauszuziehen, erfolgt dies stattdessen über die Aufwickeleinrichtung, weiche vorzugsweise außerhalb des kontaminierten Bereichs angeordnet ist und daher durch einen ungefährdeten Bediener gehandhabt werden kann. Die Aufwickeleinrichtung zeichnet sich dadurch aus, dass sie eine Zugkraft auf das Zugglied ausüben kann. Dies erfolgt vorzugsweise dadurch, dass die Aufwickeleinrichtung eine Aufwickeltrommel aufweist, auf der das vorzugsweise flexible Zugglied aufgewickelt wird.

Vorzugsweise ist der Roboter dafür ausgebildet, durch einen mit dem Schienenstrang zusammenwirkendes und mittels eines Antriebsmotors angetriebenes Antriebsrad am Roboter auf dem Schienenstrang verfahrbar zu sein, wobei Mittel zur Entkopplung des Antriebsmotors vom Schienenstrang vorgesehen sind. Solche Mittel zur Entkopplung gestatten es, den Roboter in einen Zustand zu versetzen, in dem ein Zurückziehen des Roboters mittels des Zuggliedes möglich ist und nicht vom gegebenenfalls defekten Antriebsmotor behindert wird. Im einfachsten Falle ist eine solche Entkopplung durch eine schaltbare Kupplung zu erzielen.

Die Mittel zum Entkoppeln des Antriebsmotors vom Schienenstrangs sind vorzugsweise derart ausgebildet, dass sie auch bei Ausfall der Elektrik des Roboters schaltbar sind, insbesondere durch eine von außen zugängliche Handhabe am Roboter, die manuell betätigt werden kann. Eine solche Gestaltung gestattet es, in einem Notfall die Entkopplung des Antriebsmotors vom Schienenstrang durch einen zweiten Roboter durchführen zu lassen, der auf dem gleichen oder einem anderen Schienenstrang zugeführt wird.

Das Robotersystem weist vorzugsweise ein Steuergerät zur Ansteuerung des Roboters auf, welches insbesondere dafür ausgebildet ist, die automatisierte Entnahme weiterer Schienenstrangsegmente vor einem Lagerplatz, den Transport dieser Schienenstrangsegmente zum Ende des Schienenstrangs und/oder die Positionierung der Schienenstrangsegmente an dem Ende des Schienenstrangs automatisiert zu steuern. Der Roboter kann zu diesem Zweck über Sensoren verfügen, die ihm die Erfassung der Position der Schienenstrangsegmente am Lagerplatz und/oder die Sollposition eines Schienenstrangsegmentes am Ende des bereits verlegten Schienenstrangs gestatten.

Besonders von Vorteil ist es, wenn der Roboter zur Festlegung der anzubringenden Schienenstrangsegmente an einem Untergrund und/oder am letzten Schienenstrangsegment des bereits bestehenden Schienenstrangs ausgebildet ist. So ist beispielsweise denkbar, dass der Roboter dafür ausgerüstet ist, die Schienenstrangsegmente selbsttätig miteinander zu verschweißen. Insbesondere von Vorteil ist es jedoch, wenn die Schienenstrangsegmente selbst ortsfest angebrachte Kupplungsmittel aufweisen, die durch Positionierung eines anzubringenden Schienenstrangsegments am letzten Schienenstrangsegment des bereits bestehenden Schienenstrangs eine formschlüssige Kopplung bewirken, die einer Trennung der Schienenstrangsegmente entgegenwirkt. Diese Kopplungsmittel sind vorzugsweise so ausgebildet, dass ein vertikales Ablegen eines neuen Schienenstrangsegments zur formschlüssigen Kopplung der Schienenstrangsegmente in Bewegungsrichtung des Roboters führt. Dies kann beispielsweise über eine Schwalbenschwanzverbindung o.ä. mit einem entsprechenden Fortsatz einerseits und einer entsprechenden von oben und/oder von unten zugänglichen Ausnehmung andererseits erfolgen, wobei vorzugsweise jedes Schienenstrangsegment an zwei gegenüberliegenden Enden zueinander korrespondierender Kopplungsmittel aufweist. Solche Kopplungsmittel weisen den besonderen Vorteil auf, dass der Roboter keine über den Greifer hinausgehenden Werkzeuge braucht, um die Kopplung der Schienenstrangsegmente herzustellen. Alternativ oder zusätzlich kann es jedoch vorgesehen sein, dass der Roboter dafür ausgebildet ist, ein anzubringendes Schienenstrangsegment mittels eines separaten Verbindungsgliedes mit dem letzten Schienenstrangsegment des bereits bestehenden Schienenstrangs und/oder mit einem Untergrund formschlüssig zu verbinden. Ein solches separates Verbindungsglied kann beispielsweise in Form eines Haltebolzens oder einer Halteschraube vorgesehen sein, die vom Roboter nach Positionierung des anzufügenden Schienenstrangsegments eingeschoben oder eingeschraubt wird. Gegebenenfalls weist der Roboter ein hierfür vorgesehenes Werkzeug auf. Zur Festlegung des anzubringenden Schienenstrangsegments am Untergrund ist der Roboter vorzugsweise dafür ausgebildet, den Untergrund entsprechend vorzubereiten, insbesondere Bohrungen in den Untergrund einzubringen und gegebenenfalls Dübel in diese Bohrungen einzufügen.

Auch diese im Zuge der Festlegung eines neu anzubringenden Schienenstrangsegments am bestehenden Schienenstrang vorzunehmenden Handlungen werden vom Roboter vorzugsweise automatisiert und ohne Zutun eines menschlichen Bearbeiters vorgenommen.

Bei einer Weiterbildung der Erfindung ist vorgesehen, dass mindestens eines der Schienenstrangsegmente mindestens eine Untergrundauflagefläche aufweist, deren Beabstandung zu einer Oberseite des Schienenstrangsegments variabel ist, wobei vorzugsweise der Roboter dafür ausgebildet ist, die Beabstandung selbsttätig verändern zu können.

Vorzugsweise sind mehrere separat verstellbare Untergrundauflageflächen an mindestens einem Schienenstrangsegment, vorzugsweise an allen Schienenstangsegmenten, vorgesehen. Diese verstellbaren Untergrundauflageflächen erlauben es, die Schienenstrangsegmente bei unebenem Untergrund so anzupassen, dass sich dennoch ein ebener und horizontaler Fahrweg auf dem Schienenstrang ergibt. Die einfachste Gestaltung zur Erreichung einer variablen Beabstandung zwischen Untergrundauflagefläche und Oberseite des Schienenstrangsegments ist durch austauschbare Abstandshalter zu erzielen. Vorzugsweise ist die Beabstandung jedoch stufenlos einstellbar, insbesondere mittels eines über ein Gewinde verlagerbaren Abstandshalters. Die Einstellbarkeit über ein Gewinde ist zudem besonders gut geeignet, um die Einstellbarkeit durch den Roboter selbst zu gewährleisten. Vorzugsweise weist der Roboter ein am Roboterarm anbringbare Werkzeug auf, mittels dessen die Einstellung der Untergrundauflagefläche möglich ist. Der Roboter kann zwischen dem Greifer und diesem Werkzeug wechseln, um insbesondere vor Verlegen eines Schienenstrangsegmentes dieses an den jeweiligen Untergrund anzupassen.

Von besonderem Vorteil ist es, wenn am Schienenstrang eine Zahnstange vorgesehen ist und das Antriebsrad am Roboter als mit der Zahnstange kämmendes Zahnrad ausgebildet ist, wobei das Zahnrad gegenüber dem Roboter verlagerbar ist, um außer Eingriff mit der Zahnstange gebracht zu werden.

Die Erfindung betrifft weiterhin auch ein Atomkraftwerk mit einem Sicherheitsbehälter, in dessen Innenbereich radioaktive Kontamination herrscht, und einem gegenüber dem Sicherheitsbehälter strahlungsisolierten Außenbereich, wobei eine Zugangsöffnung zwischen dem Außenbereich und dem Innenbereich des Sicherheitsbehälters vorgesehen ist. Eine solche Zugangsöffnung wird üblicherweise im Zuge des Rückbaus des Atomkraftwerk in die Wandung des Sicherheitsbehälters eingebracht, um die im Sicherheitsbehälter befindlichen Komponenten entfernen zu können. Erfindungsgemäß ist das Atomkraftwerk mit einem Robotersystem oben beschriebener Art ausgebildet, dessen Schienenstrang sich vom Außenbereich durch die Zugangsöffnung hindurch bis in den Innenbereich erstreckt.

Insbesondere beim Rückbau eines solchen Atomkraftwerks ist die Verwendung des oben beschriebenen Robotersystems von Vorteil, da dieses Robotersystem sich ausgehend von dem Außenbereich durch die Zugangsöffnung hindurch selbst aufbauen kann, um nachfolgend genutzt zu werden, um die Komponenten innerhalb des Sicherheitsbehälters zu zerlegen und/oder aus dem Sicherheitsbehälter herauszutransportieren.

Als Sicherheitsbehälter wird im Zusammenhang mit dieser Erfindung der nach außen geschützte und mit Strahlung kontaminierte Bereich eines Atomkraftwerks angesehen, in dem der Kernreaktor angeordnet ist. Die erfindungsgemäße Verwendung des oben beschriebenen Robotersystems ist nicht auf spezielle Arten von Atomkraftwerken beschränkt, sondern kann bei allen Typen genutzt werden.

Bei großen Sicherheitsbehältern kann es auch vorteilhaft sein, zwei erfindungsgemäße Robotersysteme zu nutzen, die durch jeweils separate Zugangsöffnungen und auf unterschiedlichen Schienensträngen Zugang zum Sicherheitsbehälter haben.

Der Außenbereich wird vorzugsweise durch eine Schleusenkammer gebildet. Zwischen dieser Schleusenkammer und dem Innenbereich des Sicherheitsbehälters ist im Bereich der Zugangsöffnung ein Schleusentor vorgesehen. Dieses Schleusentor ist vorzugsweise dafür ausgebildet, bei bereits verlegtem Schienenstrang schließbar zu sein, insbesondere indem das Schleusentor eine Ausnehmung aufweist, die an die Formgebung des Schienenstrangs angepasst ist.

Das Verfahren zum Betrieb eines erfindungsgemäßen Roboters sieht vor, dass dieser zur Montage eines Schienenstrangs für einen schienengebundenen Roboter verwendet wird, wobei der Schienenstrang eine Mehrzahl von Schienenstrangsegmenten aufweist. Dabei ist vorgesehen, dass ausgehend von einem Zustand, in dem der schienengebundene Roboter auf einen bereits verlegten Teil des Schienenstrangs aufgesetzt ist, der schienengebundene Roboter ein zur Montage am bereits verlegten Teil des Schienenstrangs vorgesehene Schienenstrangsegment von einem Lagerplatz erfasst, dieses zu einem Ende des bereits verlegten Teils des Schienenstrangs verfährt und dieses zur Montage vorgesehene Schienenstrangsegment fluchtend zum bereits verlegten Teil des Schienenstrangs ablegt. Hierdurch vergrößert der Roboter selbst den Bereich, entlang dessen er verfahrbar ist. Diese Schritte werden mit jeweils weiteren Schienenstrangsegmenten wiederholt durchgeführt, bis der Schienenstrang seine Ziellänge erreicht hat.

Besonders von Vorteil ist es, wenn der Roboter während oder nach dem Ablegen des weiteren Schienenstrangsegments eine formschlüssige Verbindung zwischen diesem Schienenstrangsegment einerseits und dem Ende des bereits zuvor verlegten Schienenstrangs und/oder einem Untergrund andererseits herstellt. Die Herstellung dieser formschlüssigen Verbindung bereits im Zuge des Ablegens kann durch die oben beschriebene Formgebung der Schienenstrangsegmente mit entsprechenden Kopplungsmitteln erfolgen. Alternativ oder zusätzlich können weitere Verbindungsmittel wie Schrauben oder Bolzen vorgesehen sein, mit denen das neu verlegte Schienenstrangsegment untergrundseitig oder am zuvor bereits verlegten Schienenstrang befestigt wird. Zur Handhabung dieser Verbindungsmittel kann der Roboter vorzugsweise einen Greifer, der zur Handhabung der Schienenstrangsegmente vorgesehen ist, gegen ein an den Roboterarm ankoppelbares und an die Verbindungsmittel angepasstes Werkzeug austauschen.

Besonders von Vorteil ist es weiterhin, wenn der Roboter an den Schienenstrangsegmenten eine Anpassung hinsichtlich der Beabstandung des jeweiligen Schienenstrangsegments zum Untergrund durch Verstellen mindestens einer Untergrundauflagefläche vornimmt. Dies kann beispielsweise durch einen Roboterarm des Roboters geschehen, der ggf. vom Roboter zuvor mit einem hierfür geeigneten Werkzeug aus einem Werkzeugmagazin bestückt werden wird. Die Anpassung des Schienenstrangsegmentes erfolgt vorzugsweise, bevor der Roboter das jeweilige Schienenstrangsegment am Lagerplatz erfasst. Ebenfalls oder zusätzlich kann vorgesehen sein, dass die Schienenstrangsegmente vor der Erfassung durch den Roboter bereits mit spezifisch ausgewählten Abstandshaltern mit Untergrundauflagefläche versehen werden, wobei dies auch von Hand im strahlungsisolierten Außenbereich geschehen kann.

Die jeweilige Einstellung der Untergrundauflagefläche erfolgt vorzugsweise auf Basis eines 3D-Modells, welches im Roboter hinterlegt ist und welches den Bereich, in dem der Schienenstrang verlegt werden soll, geometrisch wiedergibt.

Der erfindungsgemäße Roboter wird vorzugsweise bei einem Verfahren zum Rückbau eines Atomkraftwerk verwendet. Bei diesem Verfahren wird zum Rückbau von radioaktiv kontaminierten Komponenten des Atomkraftwerks innerhalb eines Sicherheitsbehälters ein Schienenstrang von einer Außenumgebung nach oben beschriebenem Verfahren bis in einen Sicherheitsbehälter des Atomkraftwerks verlegt.

Dabei ist es besonders von Vorteil, wenn der zum Verlegen der Schienenstrangsegmente verwendete schienengebundene Roboter nach der Montage des Schienenstrangs auch zur Demontage von Komponenten des Atomkraftwerks innerhalb des Sicherheitsbehälters und/oder zum Transport von demontierten Komponenten aus dem Sicherheitsbehälter in die Außenumgebung genutzt wird. Der Roboter übernimmt dadurch somit eine Doppelfunktion. Zunächst verlegt er seinen eigenen Schienenstrang, um nachfolgend auf diesem Schienenstrang verfahrbar zu sein, so dass hierdurch die Demontage der Komponenten des Atomkraftwerks bewerkstelligt werden kann. Besonders vorteilhaft ist es auch, wenn die Demontage der Komponenten und der Transport der demontierten Komponenten durch zwei Roboter gemeinsam durchgeführt wird, die vorzugsweise auf dem gleichen Schienenstrang verfahrbar sind. Zumindest einer dieser Roboter ist zuvor auch für die Montage des Schienenstrangs genutzt worden.

Weiterhin ist es besonders von Vorteil, wenn der Innenbereich des Sicherheitsbehälters durch eine 3D-Vermessung erfasst wird, insbesondere vor und/oder während der Montage des Schienenstrangs. Eine solche 3D-Vermessung kann beispielsweise über ein entsprechendes Laserabtastgerät realisiert werden, welches von einer festen Position aus den Raum abtastet und ein 3D-Modell hiervon erzeugt. Die so gewonnenen Daten können insbesondere genutzt werden, um die Schienenstrangsegmente hinsichtlich ihrer Beabstandung von einem Untergrund entsprechend anzupassen. Besonders von Vorteil ist es, wenn diese Vermessung mittels einer Messapparatur erfolgt, die ebenfalls vom Roboter gehandhabt werden kann, insbesondere an einer Lanze oder am Roboterarm befestigt in den Sicherheitsbehälter eingeführt werden kann.

### Kurzbeschreibung der Zeichnungen

Weitere Aspekte und Vorteile der Erfindung ergeben sich außer aus den Ansprüchen auch aus der nachfolgenden Beschreibung eines Ausführungsbeispiels der Erfindung, welches anhand der schematischen Figuren erläutert wird. Dabei zeigen:
- Fig. 1: ein erfindungsgemäßes Robotersystem in einer Ausgangslage vor der Montage des Schienenstrangs,
- Fig. 1a: ein Schienenstrangsegment des Robotersystems nach Anspruch 1,
- Fig. 1b: einen schienengebundenen Roboter des Robotersystems gemäß Figur 1,
- Fig. 2a bis 2g: die Montage des Schienenstrangs des erfindungsgemäßen Robotersystems,
- Fig. 3: das Robotersystem bei vollständig montiertem Schienenstrang und
- Fig. 4: einen Demontagevorgang unter Nutzung des erfindungsgemäßen Robotersystems.

### Detaillierte Beschreibung des Ausführungsbeispiels

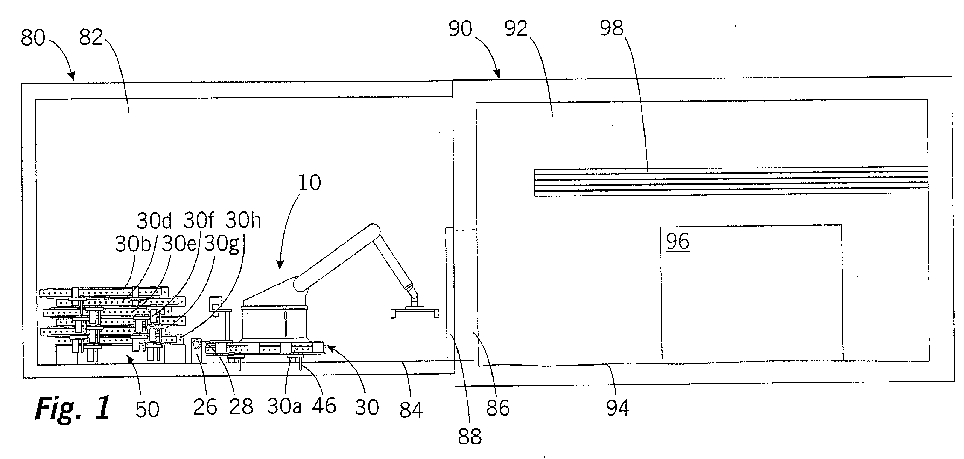

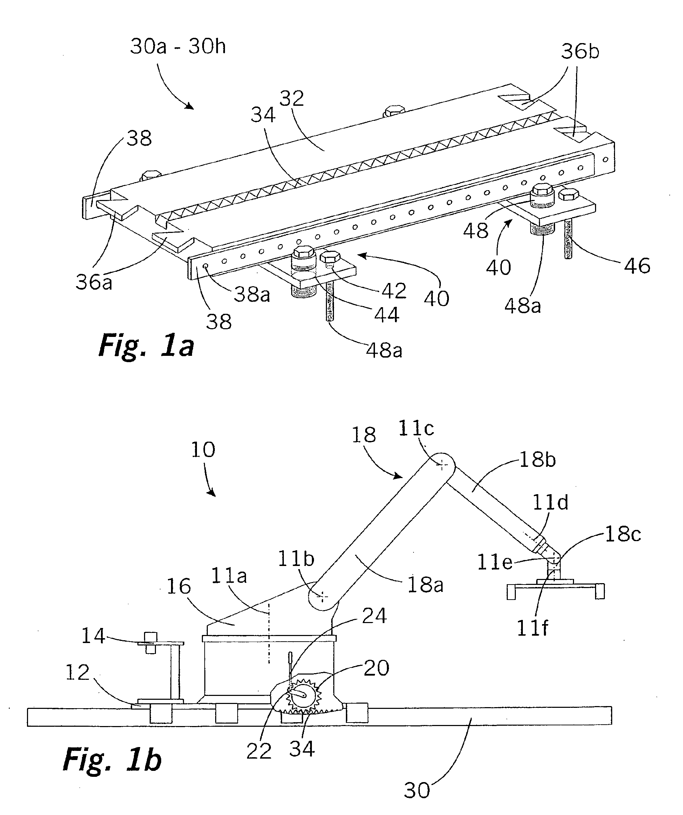

Figur 1 zeigt in einer schematischen Ansicht ein erfindungsgemäßes Robotersystem in einem Ausgangszustand. Das Robotersystem verfügt über einen schienengebundenen Roboter 10, der dafür ausgebildet ist, auf einem Schienenstrang 30 verfahrbar zu sein. Der Schienenstrang 30 besteht im Ausgangszustand der Figur 1 nur aus einem einzelnen Schienenstrangsegment 30a, welches zuvor bereits verlegt wurde und mittels Schrauben 46 in einem Untergrund 84 festegelegt wurde.

Der schienengebundene Roboter 10 und der Schienenstrang 30, bestehend zunächst nur aus dem Schienenstrangsegment 30a, befinden sich im Innenbereich 82 einer Schleusenkammer 80, die an einen Sicherheitsbehälter 90 eines Atomkraftwerks des Candu-Typs angrenzend aufgestellt wurde. Dieser Sicherheitsbehälter 90, der bestimmungsgemäß mit dem Robotersystem 10, 30 demontiert werden soll, beinhaltet einen Atomreaktor 96 sowie eine Vielzahl an Rohrleitungen, in Figur 1 durch das Rohrleitungsbündel 98 stellvertretend verdeutlicht. Innerhalb des Sicherheitsbehälters 90 herrscht ein hohes Maß an radiaktiver Strahlung, die es Menschen unmöglich macht, unmittelbar hier zum Zwecke der Demontage des Reaktors 96 und des Rohrleitungsbündels 98 tätig zu sein. Der Innenbereich 82 der Schleusenkammer 80 ist mit einem Innenbereich 92 des Sicherheitsbehälters 90 über eine Zugangsöffnung 86 verbunden, die zuvor zum Zwecke der Demontage in die Wandung des Sicherheitsbehälters 90 eingebracht wurde. Diese Zugangsöffnung 86 ist durch ein Schleusentor 88 verschließbar und freigebbar, welches hierzu in nicht näher dargestellter Art und Weise vertikal verfahrbar ist.

Das Robotersystem 10, 30 ist dafür ausgebildet, automatisiert den Schienenstrang 30 bis in den Innenbereich 92 des Sicherheitsbehälters 90 zu verlängern, so dass nachfolgend eine Demontage der stark kontaminierten Komponenten 96, 98 innerhalb des Sicherheitsbehälters 90 über Roboter durchgeführt werden kann. Hierfür sind neben dem bereits verlegten und bodenseitig befestigten Schienenstrangsegment 30a weitere Schienenstrangsegmente 30b bis 30h vorgesehen, die an einem Lagerplatz 50 gestapelt angeordnet sind.

Der Aufbau der einzelnen Schienenstrangsegmente 30a bis 30h ergibt sich aus Figur 1a. Die jeweils baugleichen und vorzugsweise zwischen 1 m und 1,50 m langen Schienenstrangsegmente 30a bis 30h weisen jeweils einen Hauptkörper 32 auf, dessen Oberseite in Haupterstreckungsrichtung durch eine Zahnstange 34 unterbrochen ist. An den beiden in Haupterstreckungsrichtung gegenüberliegenden Enden sind einerseits schwalbenschwanzförmige Fortsätze 36a und andererseits hierzu korrespondierende Ausnehmungen 36b vorgesehen. Seitlich sind am Hauptkörper 32 Verbindungsleisten 38 mit daran eingebrachten Bohrungen 38a vorgesehen. Zur Höhenanpassung sowie zur Festlegung an einem Untergrund sind beidseitig jeweils zwei Ausleger 40 am Hauptkörper 32 befestigt, die jeweils eine Bohrung 42 für eine Festlegungsschraube 46 und eine Gewindebohrung 44 für einen Höhenausgleichsbolzen 48 aufweisen. Der Höhenausgleichsbolzen 48 selbst ist mit einem Sechskantkopf ausgebildet, der es gestattet, den Höhenausgleichsboolzen 48 und damit die an dessen Unterseite vorgesehene Untergrundauflagefläche 48a zu verstellen. Durch die insgesamt vier Höhenausgleichsbolzen 48 eines jeden Schienenstrangsegmentes kann eine flexible Anpassung auch an stark unebenen Untergrund erzielt werden.

Der schienengebundene Roboter 10 ist detaillierter in Figur 1b dargestellt. Er weist eine auf dem Schienenstrang verfahrbare Fahreinheit 12 auf, an deren linker Seite ein Werkzeugmagazin 14 vorgesehen ist. Auf der Fahreinheit 12 ist eine Dreheinheit 16 vorgesehen, die einen Roboterarm 18, bestehend aus Armsegmenten 18a, 18b, 18c trägt. Das distale Armsegment 18c ist als Werkzeughalter zur Aufnahme eines Werkzeugs ausgebildet. Im Zustand der Fig. 1b ist ein Greifer 60 am Werkzeughalter 18c angebracht. Aufgrund der elektrisch, hydraulisch oder pneumatisch realisierten Rotationsbeweglichkeit des Roboterarms 18 bzw. von Teilen davon um die Rotationsachsen 11a bis 11f kann das Werkzeug flexibel bewegt werden.

Der Antrieb des schienengebundenen Roboters 10 erfolgt über einen nicht näher dargestellten Elektromotor, der auf ein Antriebszahnrad 20 wirkt. Dieses ist im Zustand der Figur 1b im Eingriff mit der Zahnstange 34 des Schienenstrangs 30. Mittels eines von außen zugänglichen Hebels 24 an der Fahreinheit 12 kann der nicht dargestellte Elektromotor sowie das Antriebszahnrad 20 um die Schwenkachse 22 nach oben verschwenkt werden, so dass das Zahnrad 20 außer Eingriff mit der Zahnstange 34 gelangt. Der zugrunde liegende Zweck wird im Weiteren noch erläutert.

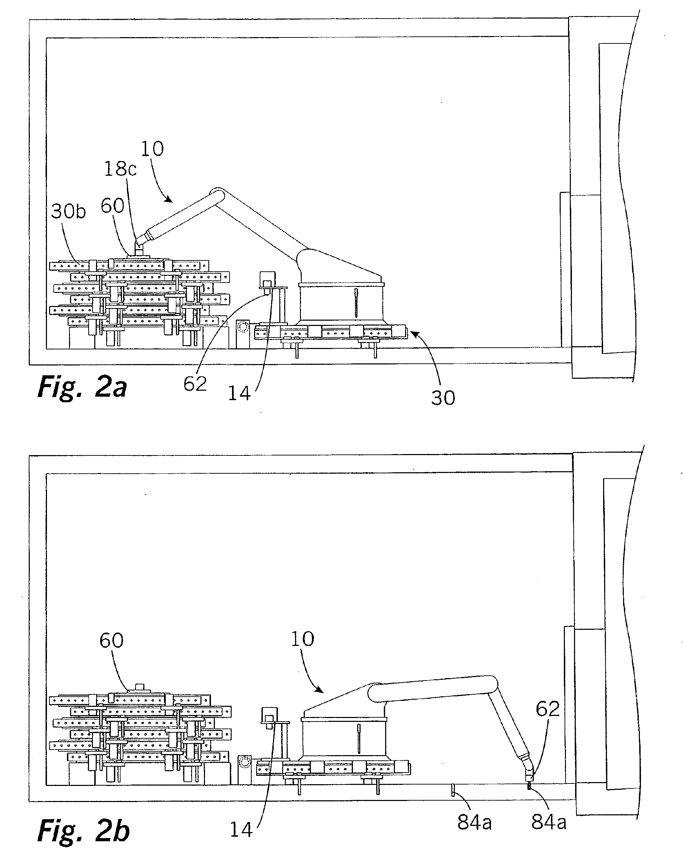

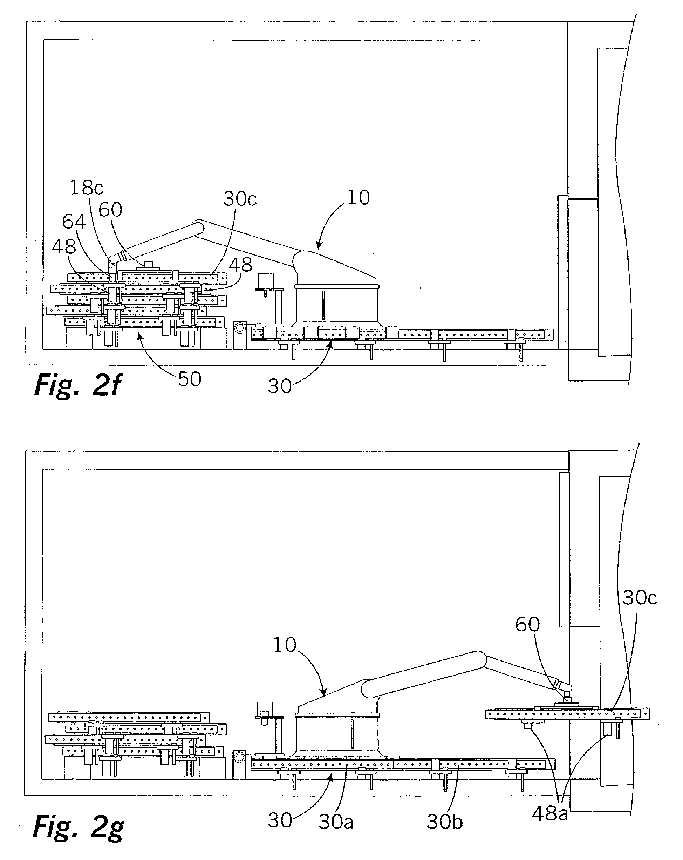

Die Funktionsweise des Robotersystems 10, 30 zur Montage des Schienenstrangs 30 wird nachfolgend anhand der Figuren 2a bis 2g erläutert.

Ausgehend vom Ausgangszustand der Figur 1 wird zunächst der Schienenstrang 30 um das Schienenstrangsegment 30b verlängert. Hierfür greift der Roboter 10 zunächst mit dem im Ausgangszustand angekoppelten Schienensegmentgreifer 60 das Schienenstrangsegment 30b am Lagerplatz 50. Ohne das Schienenstrangsegment 30b anzuheben, wird dann der Greifer 60 vom Werkzeughalter 18c entkoppelt und stattdessen ein Bohrwerkzeug 62 aus dem Werkzeugmagazin 14 angekoppelt. Wie in Fig. 2b dargestellt, bringt der Roboter 10 mit diesem Bohrwerkzeug 62 zunächst vorbereitend Bohrungen 84a in den Untergrund 84 der Schleusenkammer 84 ein.

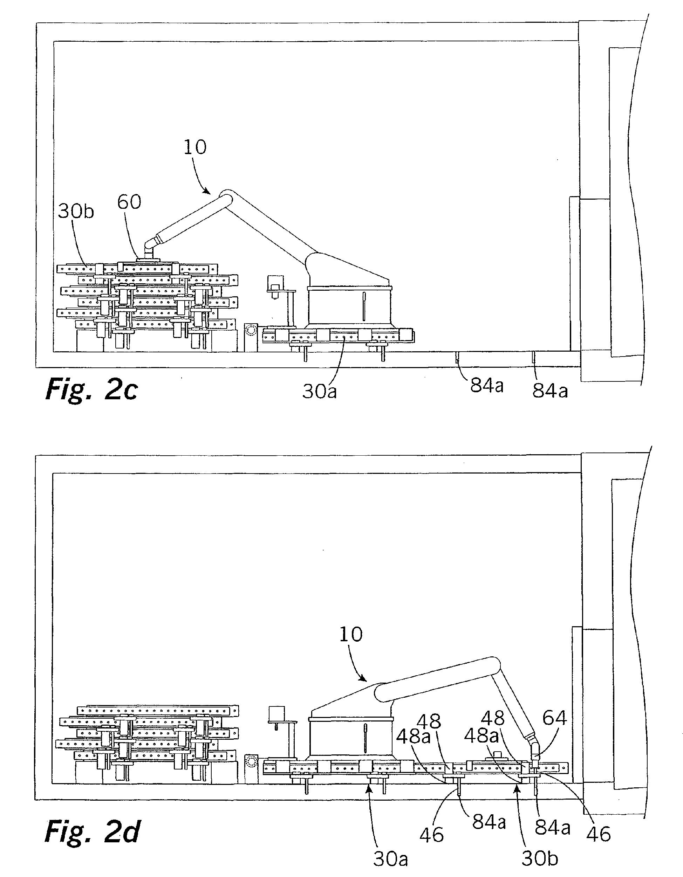

Anschließend koppelt der Roboter 10 in der in Figur 2c dargestellten Weise den Schienensegmentgreifer 60 wieder an und bewegt das Schienenstrangsegment 30b an seine vorgesehene Stelle am rechtseitigen Ende des abgelegten Schienenstrangsegments 30a. Beim vertikalen Ablegen werden die in den Fig. 2a bis 2g nicht dargestellten Schwalbenschwanzfortsätze 36a des Schienenstrangsegments 30b automatisch in Eingriff mit den entsprechenden Ausnehmungen 36b des Schienenstrangsegments 30a eingeführt, so dass bereits mit dem Ablegen eine formschlüssige Kopplung erzielt wird. Die Höhenausgleichsbolzen 48 des Schienenstrangsegments 30b sind bereits im Vorfeld richtig eingestellt worden, so dass hier keine Anpassung mehr erforderlich ist. Es ist aber auch möglich, die Höhenausgleichsbolzen 48 in der der nachfolgend noch zum Schienenstrangsegment 30c erläuterten Weise durch den Roboter selbst einstellen zu lassen.

Zur Festlegung des neu angelegten Schienenstrangsegments 30b koppelt der Roboter 10 nach Ablegen des Schienenstrangsegments 30b den Schienensegmentgreifer 60 ab, um ein Schraubwerkzeug 64 aus dem Werkzeugmagazin 14 zu entnehmen, welches in der in Figur 2d dargestellten Art und Weise genutzt wird, um die Schrauben 46 in die zuvor hergestellten Bohrungen 84a einzuschrauben.

Zusätzlich können die Schienenstrangsegmente 30a bis 30f auch über die Verbindungsleisten 38 und darin einzusetzende zusätzliche Schrauben verbunden werden, wobei dies hier nicht näher erläutert zu werden braucht.

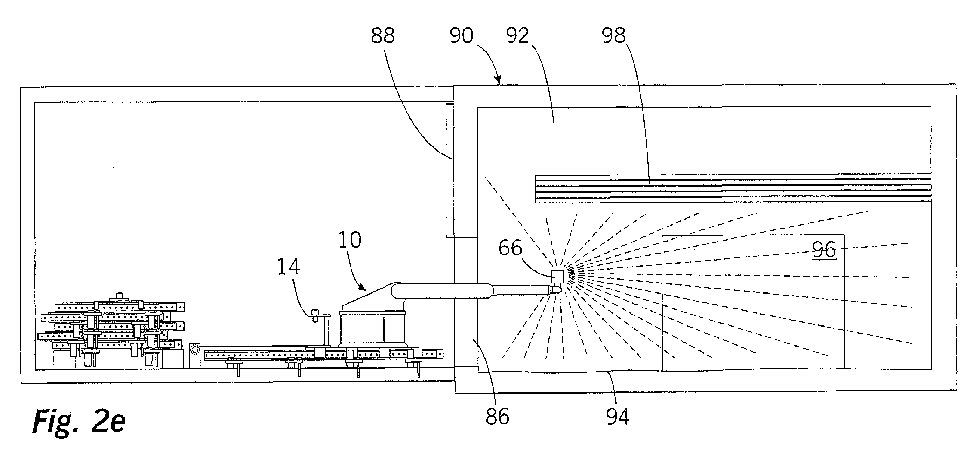

Bevor der Bau des Schienenstrangs 30 durch den Roboter 10 fortgesetzt wird, wird in einem nachfolgenden Schritt zunächst der Innenbereich 92 des Sicherheitsbehälters 90 vermessen. Zu diesem Zweck koppelt der Roboter zunächst einen 3D-Scanner 66 aus dem Werkzeugmagazin 14 an, um nachfolgend nach Öffnen des Schleusentors 88 diesen 3D-Scanner 66 bis in den innenbereich 92 des Sicherheitsbehälters 90 einzufahren und dort in der in Figur 2e dargestellten Weise eine 3D-Vermessung vorzunehmen. Durch diese Vermessung wird insbesondere auch der Bodenbereich 94 des Sicherheitsbehälters 90 vermessen, um die für die Verlegung der weiteren Schienenstrangsegmente 30c bis 30f erforderlichen Höheninformationen zu erhalten.

Wenn dies abgeschlossen ist, wird der Bau des Schienenstrangs 30 fortgesetzt, wobei der Roboter 10 hierfür vor dem Entnehmen eines jeden Schienenstrangsegments 30c bis 30f vom Lagerplatz 50 jeweils zunächst automatisiert eine Einstellung der Höhenausgleichsbolzen 48 entsprechend der zuvor ermittelten Informationen über den Untergrund 94 des Sicherheitsbehälters 90 vornimmt. Dies ist in Figur 2f dargestellt. Sobald die entsprechende Einstellung erfolgt ist, wird mittels des Schienensegmentgreifers 60 das entsprechende Schienenstrangsegment 30b bis 30f zum Ende des bereits verlegten Schienenstrangs 30 transportiert und dort abgelegt, so dass es jeweils wieder zur formschlüssigen Kopplung mittels der Schwalbenschwanzfortsätze und -ausnehmungen 36a, 36b kommt. In der bereits zu Figur 2b beschriebenen Art und Weise werden für jedes Schienenstrangsegment zunächst Bohrungen 94a in den Untergrund 94 des Sicherheitsbehälters 90 eingebracht.

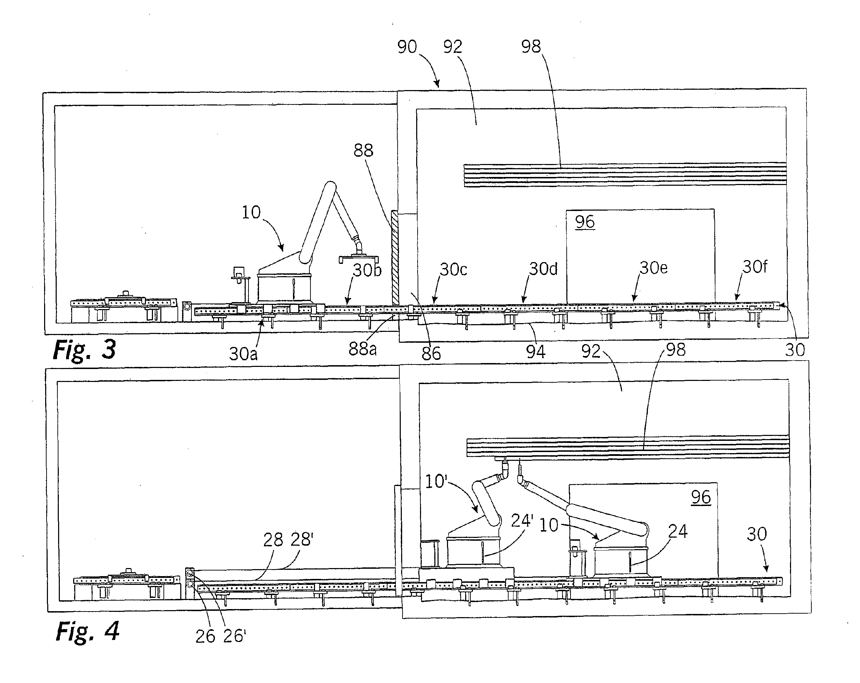

Figur 3 zeigt das Robotersystem nach Fertigstellung des Schienenstrangs 30. Es ist ersichtlich, dass mittels des Roboters 10 der Schienenstrang 30 ohne Gefährdung menschlichen Lebens bis tief in den Innenbereich 92 des Sicherheitsbehälters 90 verlegt werden kann, so dass ausgehend von diesem fertig montierten Zustand die Demontage der Komponenten innerhalb des Sicherheitsbehälters 90 beginnen kann.

In der Darstellung der Figur 3 ist das Schleusentor 88 geschnitten dargestellt. Es ist zu erkennen, dass das Schleusentor an seiner unteren Abschlusskante eine Ausnehmung 88a aufweist. Diese Ausnehmung 88a ist hinsichtlich ihrer Form an den Querschnitt des Schienenstrangs 30 angepasst, so dass die Menge der austretenden Strahlung bei geschlossenem Schleusentor 88 sehr gering ist.

Figur 4 zeigt die Arbeit des Roboters 10 sowie eines zweiten Roboters 10' im Zuge der Demontage des Rohrleitungsbündels 98. Dabei nutzen beide Roboter 10, 10' den Schienenstrang 30 als Fahrweg. Gemeinsam können Sie in schneller und effizienter Weise die im Sicherheitsbehälter 90 zu demontierenden Komponenten 96, 98 zerlegen und abmontieren und die Teile durch die Zugangsöffnung 86 aus dem Sicherheitsbehälter 90 heraustransportieren, so dass diese der Dekontamination zugeführt werden können.

Beide Roboter 10, 10' verfügen über Zugseile 28, 28', die es gestatten, dass die Roboter 10, 10' über elektrisch betriebene Seilwinden 26, 26' aus dem Innenraum 92 des Sicherheitsbehälters 90 herausgezogen werden, auch wenn ein Antriebsmotor eines der Roboter 10, 10' versagt. Zur Entkopplung des jeweiligen Antriebsmotors während des Herausziehens des defekten Roboters 10, 10' mittels einer der Seilwinden 26, 26' können die oben beschriebenen jeweiligen Hebel 24, 24' der Roboter 10, 10' durch den jeweils anderen Roboter mechanisch von außen betätigt werden. Hierdurch ist eine Bergung eines havarierten Roboters auch dann möglich, wenn eine Rückführung des Roboters in die Schleusenkammer 80 nicht realisierbar ist, solange das Antriebszahnrad 20 mit der Zahnstange 34 des Schienenstrangs 30 im Eingriff ist.

## Patentansprüche

1. Robotersystem mit
- einem Schienenstrang (30) und
- einem Roboter (10), der dafür ausgebildet ist, durch den Schienenstrang (30) geführt in einer Bewegungsrichtung verfahrbar zu sein,
wobei
- der Schienenstrang (30) aus einer Mehrzahl in Bewegungsrichtung angeordneter Schienenstrangsegmente (30a bis 30f) besteht und
- der Roboter (10) zur Handhabung solcher Schienenstrangsegmente (30b bis 30f) und zur Verlängerung des Schienenstrangs (30) durch Anbringung von weiteren Schienenstrangsegmenten (30b bis 30f) an einem jeweils letzten Schienenstrangsegment des bereits bestehenden Schienenstrangs (30) ausgebildet ist,
**dadurch gekennzeichnet, dass**
- ein am Roboter (10) angebrachtes Zugglied (28), insbesondere ein Zugkabel (28), vorgesehen ist, das entlang des Schienenstrangs (30) verläuft, wobei zur Einleitung einer Zugkraft vorzugsweise im Bereich eines Endes des Schienenstrangs (30) eine Aufwickeleinrichtung (26) zur Aufnahme des Zuggliedes (28) vorgesehen ist.

2. Robotersystem nach Anspruch 1,
**dadurch gekennzeichnet, dass**
der Roboter (10) zur Festlegung der anzubringenden Schienenstrangsegmente (30b bis 30f) an einem Untergrund (84, 94) und/oder am letzten Schienenstrangsegment (30a bis 30e) des bereits bestehenden Schienenstrangs (30) ausgebildet ist, wobei hierzu vorzugsweise
- die Schienenstrangsegmente (30a bis 30f) ortsfest angebrachte Kopplungsmittel (36a, 36b) aufweisen, die durch Positionierung eines anzubringenden Schienenstrangsegments (30b bis 30f) am jeweils letzten Schienenstrangsegment des bereits bestehenden Schienenstrangs (30) eine formschlüssige Kopplung bewirken, und/oder
- der Roboter dafür ausgebildet ist, ein anzubringendes Schienenstrangsegment (30b bis 30f) mittels eines separaten Verbindungsgliedes (46) mit dem letzten Schienenstrangsegment des bereits bestehenden Schienenstrangs (30) und/oder mit dem Untergrund (84, 94) formschlüssig zu verbinden.

3. Robotersystem nach einem der vorstehenden Ansprüche,
**dadurch gekennzeichnet, dass**
mindestens eines der Schienenstrangssegmente (30a bis 30f) mindestens eine Untergrundauflagefläche (48a) aufweist, deren Beabstandung zu einer Oberseite des Schienenstrangsegments (30a bis 30f) variabel ist, wobei vorzugsweise der Roboter (10) dafür ausgebildet ist, die Beabstandung verändern zu können.

4. Robotersystem nach einem der vorstehenden Ansprüche,
**dadurch gekennzeichnet, dass**
der Roboter (10) dafür ausgebildet ist, durch ein mit dem Schienenstrang (30) zusammenwirkendes und mittels eines Antriebsmotors angetriebenes Antriebsrad (20) auf dem Schienenstrang (30) verfahrbar zu sein, wobei Mittel (22, 24) zur Entkopplung des Antriebsmotors vom Schienenstrang (30) vorgesehen sind.

5. Robotersystem nach Anspruch 4,
**dadurch gekennzeichnet, dass**
am Schienenstrang (30) eine Zahnstange (34) vorgesehen ist und das Antriebsrad (20) am Roboter (10) als Zahnrad (20) ausgebildet ist, wobei das Zahnrad (20) gegenüber dem Roboter (10) verlagerbar ist, um außer Eingriff mit der Zahnstange (30) gebracht zu werden.

6. Atomkraftwerk mit
- einem Sicherheitsbehälter (90), in dessen Innenbereich (92) radioaktive Kontamination herrscht,
- einem gegenüber dem Sicherheitsbehälter (90) strahlungsisolierten Außenbereich (82),
wobei eine Zugangsöffnung (86) zwischen dem Außenbereich (82) und dem Innenbereich (92) des Sicherheitsbehälters (90) vorgesehen ist,
**gekennzeichnet durch**
mindestens ein Robotersystem nach einem der Ansprüche 1 bis 5, wobei der Schienenstrang (30) des Robotersystems sich vom Außenbereich (82) **durch** die Zugangsöffnung (86) bis in den Innenbereich (92) des Sicherheitsbehälters (90) erstreckt.

7. Atomkraftwerk nach Anspruch 6,
**dadurch gekennzeichnet, dass**
der Außenbereich (82) durch eine Schleusenkammer (82) gebildet wird und ein Schleusentor (88) zwischen der Schleusenkammer (82) und dem Innenbereich (92) des Sicherheitsbehälters (90) vorgesehen ist, wobei das Schleusentor (88) vorzugsweise eine Ausnehmung (88a) für den Schienenstrang (30) aufweist.

8. Verwendung eines Robotersystems nach einem der Ansprüche 1 bis 5 in einem Atomkraftwerk, wobei der Schienenstrang (30) sich von einem Außenbereich (82) durch eine Zugangsöffnung (86) bis in den Innenbereich (92) eines Sicherheitsbehälters (90) erstreckt.

9. Verwendung nach Anspruch 8,
**dadurch gekennzeichnet, dass**
das Robotersystem im Zug des Rückbaus des Atomkraftwerks verwendet wird.

## Claims

1. A robot system comprising
- a rail track (30) and
- a robot (10) that is adapted to be guided by said rail track (30) for movement in a direction of motion, wherein
- said rail track (30) consists of a plurality of rail-track elements (30a to 30f) arranged in said direction of motion, and
- said robot (10) is adapted to manipulating such rail-track elements (30b to 30f) and for lengthening said rail track (30) by attaching further rail-track elements (30b to 30f) to a respective last rail-track element of an already existing rail track (30),
**characterized in that**
- a traction member (28), more particularly a traction cable (28), is provided which is secured to said robot (10) and extends along said rail track (30) and, for the purpose of creating a tractive force, a winding device (26) is provided, preferably in the area of one end of said rail track (30), for taking up said traction member (28).

2. The robot system according to claim 1,
**characterized in that**
said robot (10) is configured for fixing of rail-track elements (30a to 30f) to be fitted to an underlying surface (84, 94) and/or to the last rail-track element (30a to 30e) of an already existing rail track (30), and to this end preferably
- the rail-track elements (30a to 30f) have immovably mounted coupling means (36a, 36b) which create a positive coupling when a rail-track element (30b to 30f) to be fitted is positioned at the respective last rail-track element of an already existing rail track (30), and/or
- said robot is adapted to create a positive connection by means of a separate connecting member (46) between a rail-track element (30b to 30f) to be fitted and the last rail-track element of an already existing railway track (30) and/or said underlying surface (84, 94).

3. The robot system according to any one of the preceding claims,
**characterized in that**
at least one of the rail-track elements (30a to 30f) has at least one surface (48a) configured to rest on said underlying surface at a variable distance from a top surface of said rail-track element (30a to 30f), the robot (10) being preferably adapted to vary said distance.

4. The robot system according to any one of the preceding claims,
**characterized in that**
said robot (10) is configured to be movable along said rail track (30) by means of a driving wheel (20) that cooperates with said rail track (30) and is driven by a drive motor and means (22, 24) are provided for decoupling said drive motor from said rail track (30).

5. The robot system according to claim 4,
**characterized in that**
a toothed rack (34) is provided on said rail track (30) and said driving wheel (20) on said robot (10) is in the form of a gearwheel (20) which gearwheel (20) can be shifted relative to said robot (10) for disengagement from said toothed rack (30).

6. A nuclear power station, comprising
- a containment (90), in the interior (92) of which radioactive contamination prevails,
- an exterior area (82) that is radiation-shielded relatively to said containment (90),
an access opening (86) being provided between said exterior area (82) and the interior (92) of said containment (90),
**characterized by**
at least one robot system according to any one of claims 1 to 5, in which the rail track (30) of said robot system extends from said exterior area (82) through said access opening (86) to the interior (92) of said containment (90).

7. The nuclear power station according to claim 6,
**characterized in that** said exterior area (82) is delimited by a sluice chamber (82) and is provided with a sluice gate (88) between said sluice chamber (82) and the interior (92) of said containment (90), which sluice gate (88) preferably has a recess (88a) for said rail track (30).

8. Use of a robot system according to any one of claims 1 to 5 in a nuclear power station, in which said rail track (30) extends from an exterior area (82) through an access opening (86) to the interior (92) of a containment (90).

9. The use according to claim 8, **characterized in that**
said robot system is used during dismantling of the nuclear power station.

## Revendications

1. Système de robot, comprenant
- une file de rails (30) et
- un robot (10) qui est conçu pour pouvoir être déplacé dans une direction de déplacement de manière guidée par la file de rails (30),
- la file de rails (30) étant constituée d'une pluralité de segments de file de rails (30a à 30f) disposés dans la direction de déplacement et
- le robot (10) étant conçu pour la manipulation de tels segments de file de rails (30b à 30f) et pour le rallongement de la file de rails (30) en plaçant des segments de file de rails (30b à 30f) supplémentaires contre un dernier segment de file de rails respectif de la file de rails (30) déjà existante, **caractérisé en ce que**
- un organe de traction (28) monté sur le robot (10), en particulier un câble de traction (28), est prévu, lequel s'étend le long de la file de rails (30), un dispositif d'enroulement (26) destiné à recevoir l'organe de traction (28) étant prévu pour l'application d'une force de traction de préférence dans la région d'une extrémité de la file de rails (30).

2. Système de robot selon la revendication 1,
**caractérisé en ce que**
le robot (10) est conçu pour la fixation des segments de file de rails (30b à 30f) à placer sur un support (84, 94) et/ou contre le dernier segment de file de rails (30a à 30e) de la file de rails (30) déjà existante, et à cet effet, de préférence,
- les segments de file de rails (30a à 30f) comprenant des moyens d'accouplement (36a, 36b) montés de manière fixe qui provoquent un accouplement par engagement par complémentarité de formes par positionnement d'un segment de file de rails (30b à 30f) à placer contre le dernier segment de file de rails respectif de la file de rails (30) déjà existante, et/ou
- le robot étant conçu pour relier par engagement par complémentarité de formes un segment de file de rails (30b à 30f) à placer, au moyen d'un organe de liaison séparé (46), au dernier segment de file de rails de la file de rails (30) déjà existante et/ou au support (84, 94).

3. Système de robot selon l'une quelconque des revendications précédentes, **caractérisé**
**en ce qu'**au moins l'un des segments de file de rails (30a à 30f) comprend au moins une surface d'appui de support (48a) dont l'espacement par rapport à un côté supérieur du segment de file de rails (30a à 30f) est variable, le robot (10) étant de préférence conçu pour pouvoir modifier l'espacement.

4. Système de robot selon l'une quelconque des revendications précédentes,
**caractérisé en ce que**
le robot (10) est conçu pour pouvoir être déplacé sur la file de rails (30) au moyen d'une roue d'entraînement (20) coopérant avec la file de rails (30) et entraînée au moyen d'un moteur d'entraînement, des moyens (22, 24) étant prévus pour désaccoupler le moteur d'entraînement de la file de rails (30).

5. Système de robot selon la revendication 4,
**caractérisé**
**en ce qu'**une crémaillère (34) est prévue sur la file de rails (30) et la roue d'entraînement (20) sur le robot (10) est réalisée sous forme de roue dentée (20), la roue dentée (20) pouvant être déplacée par rapport au robot (10), afin de pouvoir être amenée hors de prise avec la crémaillère (30).

6. Centrale nucléaire comprenant
- un contenant de sécurité (90) dans la région intérieure (92) duquel règne une contamination radioactive,
- une région extérieure (82) isolée contre les radiations vis-à-vis du contenant de sécurité (90),
une ouverture d'accès (86) étant prévue entre la région extérieure (82) et la région intérieure (92) du contenant de sécurité (90),
**caractérisée par**
au moins un système de robot selon l'une quelconque des revendications 1 à 5, la file de rails (30) du système de robot s'étendant à partir de la région extérieure (82), à travers l'ouverture d'accès (86), jusque dans la région intérieure (92) du contenant de sécurité (90).

7. Centrale nucléaire selon la revendication 6,
**caractérisée en ce que** la région extérieure (82) est formée par une chambre de sas (82) et une porte de sas (88) est prévue entre la chambre de sas (82) et la région intérieure (92) du contenant de sécurité (90), la porte de sas (88) comprenant de préférence un évidement (88a) pour la file de rails (30).

8. Utilisation d'un système de robot selon l'une quelconque des revendications 1 à 5 dans une centrale nucléaire, la file de rails (30) s'étendant à partir d'une région extérieure (82), à travers une ouverture d'accès (86), jusque dans la région intérieure (92) d'un contenant de sécurité (90).

9. Utilisation selon la revendication 8, **caractérisée en ce que**
le système de robot est utilisé au cours du démantèlement de la centrale nucléaire.
